(19)

Europäisches Patentamt
European Patent Office
Office européen des brevets

(11)  EP 3 607 801 B1

# (12)     EUROPEAN PATENT SPECIFICATION

(45) Date of publication and mention
of the grant of the patent:
**22.12.2021  Bulletin 2021/51**

(21) Application number: **18780410.9**

(22) Date of filing: **04.04.2018**

(51) Int Cl.:
***H04W 74/08*** (2009.01)     ***H04W 74/00*** (2009.01)

(86) International application number:
**PCT/KR2018/003967**

(87) International publication number:
**WO 2018/186677 (11.10.2018 Gazette 2018/41)**

(54) **APPARATUS AND METHOD FOR PERFORMING A RANDOM ACCESS PROCEDURE**

VORRICHTUNG UND VERFAHREN ZUR DURCHFÜHRUNG EINES DIREKTZUGRIFFSVERFAHRENS

APPAREIL ET PROCÉDÉ DE RÉALISATION D'UNE PROCÉDURE D'ACCÈS ALÉATOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.04.2017  US 201762481599 P**

(43) Date of publication of application:
**12.02.2020  Bulletin 2020/07**

(73) Proprietor: **LG Electronics Inc.
Seoul 07336 (KR)**

(72) Inventors:
• **LEE, Sunyoung
Seoul 06772 (KR)**
• **YI, Seungjune
Seoul 06772 (KR)**

(74) Representative: **Katérle, Axel
Wuesthoff & Wuesthoff
Patentanwälte PartG mbB
Schweigerstraße 2
81541 München (DE)**

(56) References cited:
**WO-A1-2016/186542     US-A1- 2013 279 453
US-A1- 2014 079 013     US-A1- 2014 098 752
US-A1- 2014 162 646     US-A1- 2016 302 080**

• **ASUSTEK: "Discussion on RA backoff in NR", 3GPP DRAFT; R2-1703157 DISCUSSION ON RA BACKOFF IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170403 - 20170407 3 April 2017 (2017-04-03), XP051245090, Retrieved from the Internet: URL:http://www.3gpp.org/ftp/Meetings_3GPP_ SYNC/RAN2/Docs/ [retrieved on 2017-04-03]**
• **ZTE: "Backoff enhancements for RAN overload control", 3GPP DRAFT; R2-111916 BACKOFF ENHANCEMENTS FOR RAN OVERLOAD CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20110411, 5 April 2011 (2011-04-05), XP050494477, [retrieved on 2011-04-05]**
• **ETSI: "LTE; Evolved Universal Terrestrial Radio Access (E-UTRA); Medium Access Control (MAC) protocol specification (3GPP TS 36.321 version 8.2.0 Release 8)", ETSI TS 136 321 V8.2.0, 4 November 2008 (2008-11-04), XP055560118,**

EP 3 607 801 B1

**Description**

**Technical Field**

The present invention relates to wireless communication, and more particularly, to apparatus and method for performing a random access procedure.

**Background Art**

As an example of a mobile communication system to which the present invention is applicable, a 3rd Generation Partnership Project Long Term Evolution (hereinafter, referred to as LTE) communication system is described in brief.

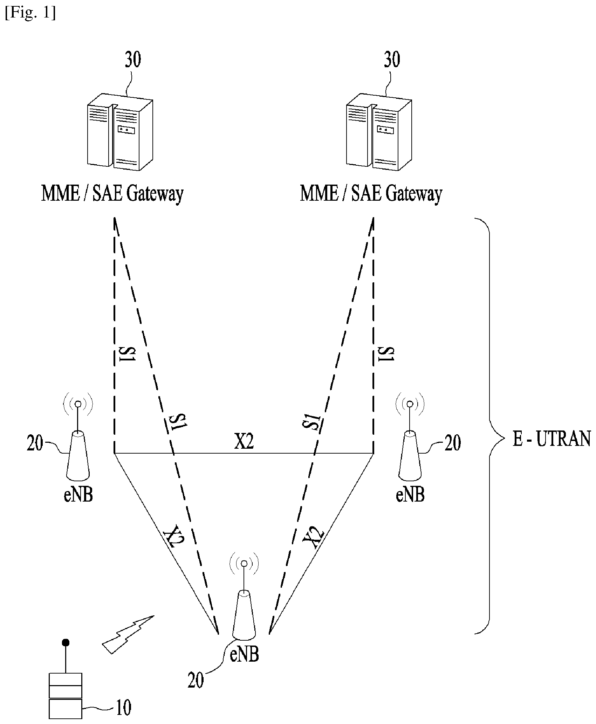

FIG. 1 is a block diagram illustrating network structure of an evolved universal mobile telecommunication system (E-UMTS). The E-UMTS may be also referred to as an LTE system. The communication network is widely deployed to provide a variety of communication services such as voice (VoIP) through IMS and packet data.

As illustrated in FIG. 1, the E-UMTS network includes an evolved UMTS terrestrial radio access network (E-UTRAN), an Evolved Packet Core (EPC) and one or more user equipment. The E-UTRAN may include one or more evolved NodeB (eNodeB) 20, and a plurality of user equipment (UE) 10 may be located in one cell. One or more E-UTRAN mobility management entity (MME)/system architecture evolution (SAE) gateways 30 may be positioned at the end of the network and connected to an external network.

As used herein, "downlink" refers to communication from eNodeB 20 to UE 10, and "uplink" refers to communication from the UE to an eNodeB. UE 10 refers to communication equipment carried by a user and may be also referred to as a mobile station (MS), a user terminal (UT), a subscriber station (SS) or a wireless device. eNode B 20 may be reffered to as eNB and gNode B (gNB), etc. However, in the following explanation, the term 'UE' and 'eNodeB' are used for convenience.

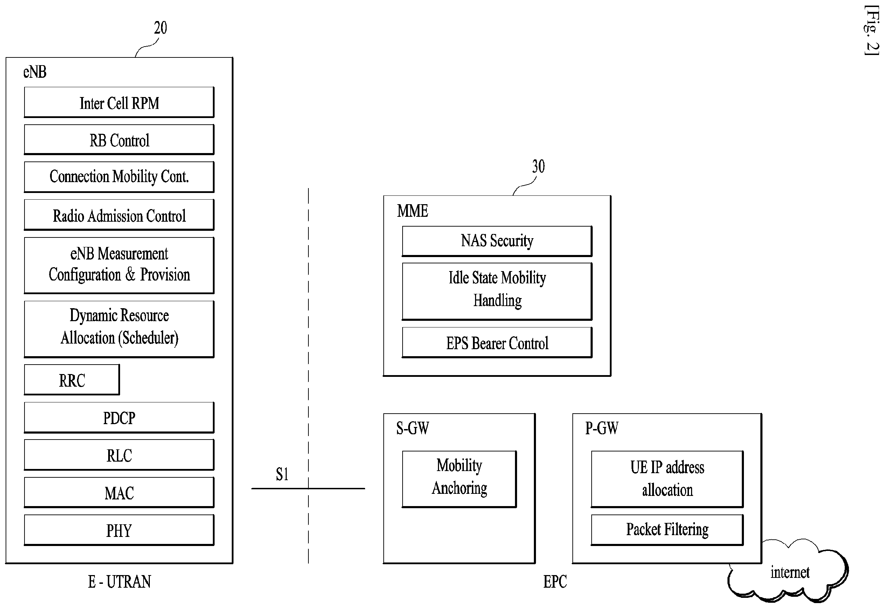

FIG. 2 is a block diagram depicting architecture of a typical E-UTRAN and a typical EPC.

As illustrated in FIG. 2, an eNodeB 20 provides end points of a user plane and a control plane to the UE 10. MME/SAE gateway 30 provides an end point of a session and mobility management function for UE 10. The eNodeB and MME/SAE gateway may be connected via an S1 interface.

The eNodeB 20 is generally a fixed station that communicates with a UE 10, and may also be referred to as a base station (BS) or an access point. One eNodeB 20 may be deployed per cell. An interface for transmitting user traffic or control traffic may be used between eNodeBs 20.

The MME provides various functions including NAS signaling to eNodeBs 20, NAS signaling security, AS Security control, Inter CN node signaling for mobility between 3GPP access networks, Idle mode UE Reachability (including control and execution of paging retransmission), Tracking Area list management (for UE in idle and active mode), PDN GW and Serving GW selection, MME selection for handovers with MME change, SGSN selection for handovers to 2G or 3G 3GPP access networks, Roaming, Authentication, Bearer management functions including dedicated bearer establishment, Support for PWS (which includes ETWS and CMAS) message transmission. The SAE gateway host provides assorted functions including Per-user based packet filtering (by e.g. deep packet inspection), Lawful Interception, UE IP address allocation, Transport level packet marking in the downlink, UL and DL service level charging, gating and rate enforcement, DL rate enforcement based on APN-AMBR. For clarity MME/SAE gateway 30 will be referred to herein simply as a "gateway," but it is understood that this entity includes both an MME and an SAE gateway.

A plurality of nodes may be connected between eNodeB 20 and gateway 30 via the S1 interface. The eNodeBs 20 may be connected to each other via an X2 interface and neighboring eNodeBs may have a meshed network structure that has the X2 interface.

As illustrated in FIG. 2, eNodeB 20 may perform functions of selection for gateway 30, routing toward the gateway during a Radio Resource Control (RRC) activation, scheduling and transmitting of paging messages, scheduling and transmitting of Broadcast Channel (BCCH) information, dynamic allocation of resources to UEs 10 in both uplink and downlink, configuration and provisioning of eNodeB measurements, radio bearer control, radio admission control (RAC), and connection mobility control in LTE_ACTIVE state. In the EPC, and as noted above, gateway 30 may perform functions of paging origination, LTE-IDLE state management, ciphering of the user plane, System Architecture Evolution (SAE) bearer control, and ciphering and integrity protection of Non-Access Stratum (NAS) signaling.

The EPC includes a mobility management entity (MME), a serving-gateway (S-GW), and a packet data network-gateway (PDN-GW). The MME has information about connections and capabilities of UEs, mainly for use in managing the mobility of the UEs. The S-GW is a gateway having the E-UTRAN as an end point, and the PDN-GW is a gateway having a packet data network (PDN) as an end point.

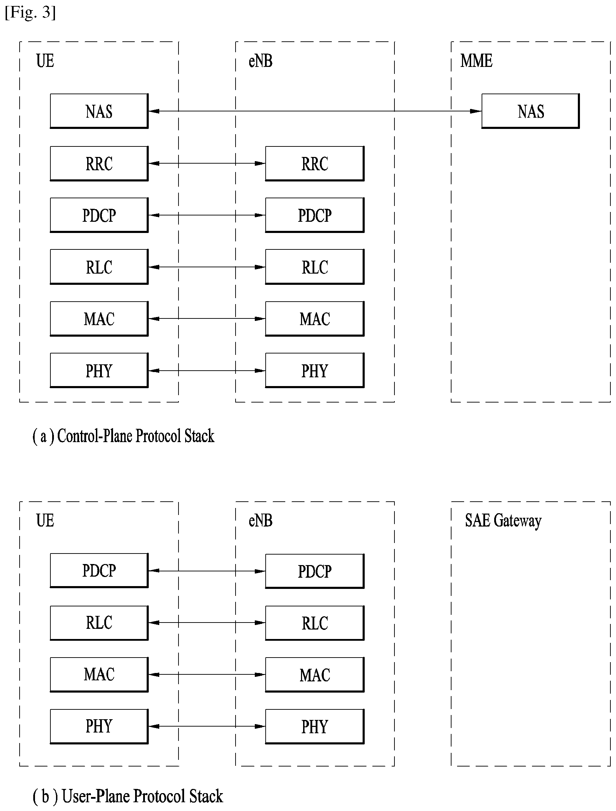

FIG. 3 is a diagram showing a control plane and a user plane of a radio interface protocol between a UE and an E-UTRAN based on a 3GPP radio access network standard. The control plane refers to a path used for transmitting control messages used for managing a call between the UE and the E-UTRAN. The user plane refers to a path used for transmitting data generated in an application layer, e.g., voice data or Internet packet data.

A physical (PHY) layer (L1) of a first layer provides an information transfer service to a higher layer using a physical channel. The PHY layer is connected to a medium access control (MAC) layer located on the higher layer via a transport channel. Data is transported between the MAC layer and the PHY layer via the transport channel. Data is transported between a physical layer of a transmitting side and a physical layer of a receiving side via physical channels. The physical channels use time and frequency as radio resources. In detail, the physical channel is modulated using an orthogonal frequency division multiple access (OFDMA) scheme in downlink and is modulated using a single carrier frequency division multiple access (SC-FDMA) scheme in uplink.

The MAC layer (L2) of a second layer provides a service to a radio link control (RLC) layer of a higher layer via a logical channel. The RLC layer of the second layer supports reliable data transmission. A function of the RLC layer may be implemented by a functional block of the MAC layer. A packet data convergence protocol (PDCP) layer of the second layer performs a header compression function to reduce unnecessary control information for efficient transmission of an Internet protocol (IP) packet such as an IP version 4 (IPv4) packet or an IP version 6 (IPv6) packet in a radio interface having a relatively small bandwidth.

A radio resource control (RRC) layer located at the bottom of a third layer is defined only in the control plane. The RRC layer controls logical channels, transport channels, and physical channels in relation to configuration, re-configuration, and release of radio bearers (RBs). An RB refers to a service that the second layer provides for data transmission between the UE and the E-UTRAN. To this end, the RRC layer of the UE and the RRC layer of the E-UTRAN exchange RRC messages with each other.

One cell of the eNB is set to operate in one of bandwidths such as 1.25, 2.5, 5, 10, 15, and 20MHz and provides a downlink or uplink transmission service to a plurality of UEs in the bandwidth. Different cells may be set to provide different bandwidths.

Downlink transport channels for transmission of data from the E-UTRAN to the UE include a broadcast channel (BCH) for transmission of system information, a paging channel (PCH) for transmission of paging messages, and a downlink shared channel (SCH) for transmission of user traffic or control messages. Traffic or control messages of a downlink multicast or broadcast service may be transmitted through the downlink SCH and may also be transmitted through a separate downlink multicast channel (MCH).

Uplink transport channels for transmission of data from the UE to the E-UTRAN include a random access channel (RACH) for transmission of initial control messages and an uplink SCH for transmission of user traffic or control messages. Logical channels that are defined above the transport channels and mapped to the transport channels include a broadcast control channel (BCCH), a paging control channel (PCCH), a common control channel (CCCH), a multicast control channel (MCCH), and a multicast traffic channel (MTCH).

In the development to a New Radio Access Technology (NR), NR system should be able to use frequency bands up to 100 GHz. In NR, random access (RA) procedure may be an essential procedure for all UEs when establishing an RRC Connection or scheduling, increased latency. It is not desirable that random access preamble collision between UEs is not desirable. Therefore, a new method is required in supporting RA procedure with NR system.

US 2013/279453 A1 discloses a method, apparatus, and system for communication information transmission. The method comprises: communication information is transmitted to a base station (BS); when the communication information fails to be transmitted to the BS, a first backoff upper limit is obtained according to the number of times the transmission has failed; a backoff upper limit is determined according to the first backoff upper limit, and a backoff time of retransmitting the communication information is selected according to the backoff upper limit.

### Disclosure of Invention

### Technical Problem

An object of the present invention devised to solve the problem lies in a method for a user equipment (UE) performing a random access procedure.

Another object of the present invention is to provide a user equipment (UE) for performing a random access procedure.

The technical objects that can be achieved through the present invention are not limited to what has been particularly described hereinabove and other technical objects not described herein will be more clearly understood by persons skilled in the art from the following detailed description.

### Solution to Problem

The invention is defined by the subject-matter of the independent claims. Advantageous embodiments are indicated in the dependent claims.

In a first aspect, the invention provides a method for a user equipment, UE, performing a random access procedure, the method comprising: transmitting a first random access preamble; receiving a message including a backoff indicator, BI, and one or more backoff offset, BO, values; the method further comprising, when a random access using the first first random access preamble fails, selecting a backoff time based on the BI and a BO value; and transmitting a second random access preamble after the selected backoff time, wherein the message does not include the first random access preamble, wherein the BO value is selected among the one or more BO values based on an event that triggers the random access procedure, and wherein the backoff time is selected based on a uniform distribution between the BI and the BO value.

In a second aspect, the invention provides a user equipment, UE, for performing a random access procedure, the UE comprising: a transmitter configured to transmit a first random access preamble; a receiver configured to receive a message including a backoff indicator, BI, and one or more backoff offset, BO, values; and a processor configured to, when a random access using the first first random access preamble fails, select a backoff time based on the BI and a BO value and transmit a second random access preamble after the selected backoff time, wherein the message does not include the first random access preamble, wherein the BO value is selected among the one or more BO values based on an event that triggers the random access procedure, and wherein the backoff time is selected based on a uniform distribution between the BI and the BO value.

## Advantageous Effects of Invention

According to an embodiment of the present invention, by performing random access procedure, collision probability of UEs in a random access procedure may be decrease.

It will be appreciated by those skilled in the art that the effects that can be achieved through the embodiments of the present disclosure are not limited to those described above and other effects of the present disclosure will be more clearly understood from the following detailed description.

## Brief Description of Drawings

The accompanying drawings, which are included to provide a further understanding of the invention, illustrate embodiments of the invention and together with the description serve to explain the principle of the invention.

FIG. 1 is a block diagram illustrating network structure of an evolved universal mobile telecommunication system (E-UMTS).

FIG. 2 is a block diagram depicting architecture of a typical E-UTRAN and a typical EPC.

FIG. 3 is a diagram showing a control plane and a user plane of a radio interface protocol between a UE and an E-UTRAN based on a 3GPP radio access network standard.

FIG. 4 is a diagram illustrating an operation procedure of a user equipment and a base station during a non-contention based random access procedure.

FIG. 5 is a diagram illustrating an operation procedure of a user equipment and a base station during a contention based random access procedure.

FIG. 6 is a diagram illustrating E/T/RAPID MAC subheader.

FIG. 7 is a diagram illustrating E/T/R/R/BI MAC subheader.

FIG. 8 is a diagram illustrating MAC RAR.

FIG. 9 is a diagram illustrating MAC RAR for PRACH enhanced coverage level 2 or 3.

FIG. 10 is a diagram illustrating MAC RAR for NB-IoT UEs.

FIG. 11 is a flow diagram of a random access procedure according to an embodiment of the present invention.

FIG. 12 is a block diagram of an apparatus (e.g., communication apparatus) according to an embodiment of the present invention.

## Mode for the Invention

Reference will now be made in detail to the preferred embodiments of the present invention with reference to the accompanying drawings. The detailed description, which will be given below with reference to the accompanying drawings, is intended to explain exemplary embodiments of the present invention, rather than to show the only embodiments that can be implemented according to the invention.

The following detailed description includes specific details in order to provide a thorough understanding of the present invention. However, it will be apparent to those skilled in the art that the present invention may be practiced without such specific details. In some instances, known structures and devices are omitted or are shown in block diagram form, focusing on important features of the structures and devices, so as not to obscure the concept of the invention.

As described before, the following description relates to a wireless communication system supporting random access procedure (RAP). So, the details of the RAP is explained first.

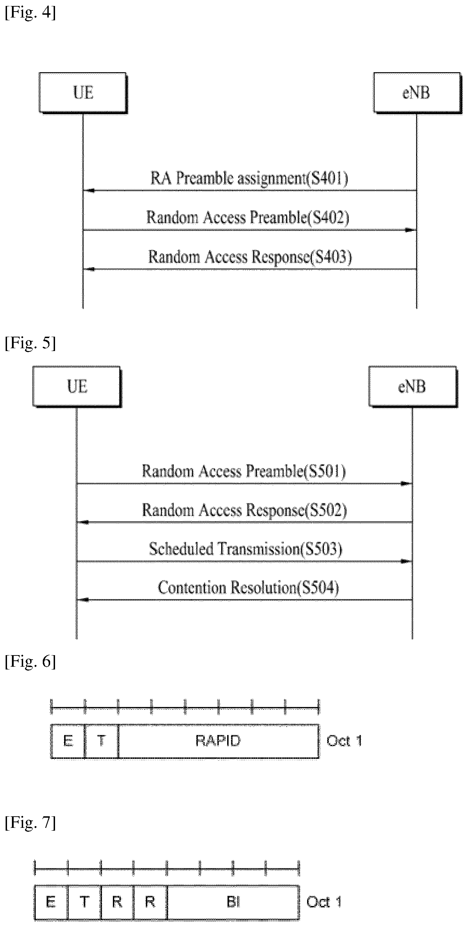

FIG. 4 is a diagram illustrating an operation procedure of a user equipment and a base station during a non-contention based random access procedure.

(1) Random access preamble assignment (S401)

The non-contention based random access procedure can be performed for two cases, i.e., (1) when the user equipment performs a handover procedure, and (2) when requested by a command of the base station. Of course, the contention based random access procedure may also be performed for the two cases.

First of all, for non-contention based random access procedure, it is important that the user equipment receives information of a designated (or dedicated) random access preamble having no possibility of contention from the base station. Examples of a method of receiving a random access preamble include a method through a handover command and a method through a PDCCH command. A random access preamble is assigned to the user equipment through the method of receiving information of a random access preamble (S401).

(2) First message transmission

As described above, after receiving a random access preamble designated only for the user equipment, the user equipment transmits the preamble to the base station (S402).

(3) Second message reception

After the user equipment transmits the random access preamble in step S402, the base station tries to receive its random access response within a random access response receiving window indicated through system information or handover command (S403). In more detail, the random access response can be transmitted in the form of a MAC protocol data unit (MAC PDU), and the MAC PDU can be transferred through a physical downlink shared channel (PDSCH). Also, it is preferable that the user equipment monitors a physical downlink control channel (PDCCH) to appropriately receive information transferred to the PDSCH. Namely, it is preferable that the PDCCH includes information of a user equipment which should receive the PDSCH, frequency and time information of radio resources of the PDSCH, and a transport format of the PDSCH. If the user equipment successfully receives the PDCCH transmitted thereto, the user equipment can appropriately receive a random access response transmitted to the PDSCH in accordance with the information of the PDCCH. The random access response can include a random access preamble identifier (ID) (for example, random access preamble identifier (RA-RNTI)), uplink grant indicating uplink radio resources, a temporary C-RNTI, and timing advance command (TAC) values.

As described above, the random access preamble identifier is required for the random access response to indicate whether the uplink grant, the temporary C-RNTI and the TAC values are effective for what user equipment as random access response information for one or more user equipments can be included in one random access response. In this case, it is assumed that the user equipment selects a random access preamble identifier corresponding to the random access preamble selected in step S402.

In the non-contention based random access procedure, the user equipment can terminate the random access procedure after determining that the random access procedure has been normally performed by receiving the random access response information.

FIG. 5 is a diagram illustrating an operation procedure of a user equipment and a base station during a contention based random access procedure.

(1) First message transmission

First of all, the user equipment randomly selects one random access preamble from a set of random access preambles indicated through system information or handover command, and selects a physical RACH (PRACH) resource that can transmit the random access preamble (S501).

(2) Second message reception

A method of receiving random access response information is similar to that of the aforementioned non-contention based random access procedure. Namely, after the user equipment transmits the random access preamble in step S402, the base station tries to receive its random access response within a random access response receiving window indicated through system information or handover command, and receives the PDSCH through corresponding random access identifier information (S502). In this case, the base station can receive uplink grant, a temporary C-RNTI, and timing advance command (TAC) values.

(3) Third message transmission

If the user equipment receives its effective random access response, the user equipment respective processes information included in the random access response. Namely, the user equipment applies TAC and store a temporary C-RNTI. Also, the user equipment transmits data (i.e., third message) to the base station using UL grant (S503). The third message should include a user equipment identifier. This is because that the base station needs to identify user equipments which perform the contention based random access procedure, thereby avoiding contention later.

Two methods have been discussed to include the user equipment identifier in the third message. In the first method, if the user equipment has an effective cell identifier previously assigned from a corresponding cell before the random access procedure, the user equipment transmits its cell identifier through an uplink transport signal corresponding to the UL grant. On the other hand, if the user equipment does not have an effective cell identifier previously assigned from a corresponding cell before the random access procedure, the user equipment transmits its cell identifier including its unique identifier (for example, S-TMSI or random ID). Generally, the unique identifier is longer than the cell identifier. If the user equipment transmits data corresponding to the UL grant, the user equipment starts a contention resolution timer.

(4) Fourth message reception

After transmitting data including its identifier through UL grant included in the random access response, the user equipment waits for a command of the base station for contention resolution. Namely, the user equipment tries to receive the PDCCH to receive a specific message (504). Two methods have been discussed to receive the PDCCH. As described above, if the third message is transmitted to correspond to the UL grant using the user equipment identifier, the user equipment tries to receive the PDCCH using its cell identifier. If the user equipment identifier is a unique identifier of the user equipment, the user equipment tries to receive the PDCCH using a temporary cell identifier included in the random access response. Afterwards, in case of the first method, if the user equipment receives the PDCCH through its cell identifier before the contention resolution timer expires, the user equipment determines that the random access procedure has been performed normally, and ends the random access procedure. In case of the second method, if the user equipment receives the PDCCH through the temporary cell identifier before the contention resolution timer expires, the user equipment identifies data transferred from the PDSCH. If the unique identifier of the user equipment is included in the data, the user equipment determines that the random access procedure has been performed normally, and ends the random access procedure.

**Random Access Procedure**

Description related to random access procedure of 3GPP LTE/LTE-A standard document is as following.

The random access procedure is characterized by:

- Common procedure for FDD and TDD;
- One procedure irrespective of cell size and the number of serving cells when CA is configured;

The random access procedure is performed for the following events related to the PCell:

- Initial access from RRC_IDLE;
- RRC Connection Re-establishment procedure, except for NB-IoT UE that only uses Control Plane CIoT EPS optimizations, as defined in TS 24.301 [20];
- Handover, except for NB-IoT;
- DL data arrival during RRC_CONNECTED requiring random access procedure:

  - E.g. when UL synchronisation status is "non-synchronised".

- UL data arrival during RRC_CONNECTED requiring random access procedure:

  - E.g. when UL synchronisation status is "non-synchronised" or there are no PUCCH resources for SR available.

- For positioning purpose during RRC_CONNECTED requiring random access procedure:

- E.g. when timing advance is needed for UE positioning.

The random access procedure is also performed on a SCell to establish time alignment for the corresponding sTAG.

In DC, the random access procedure is also performed on at least PSCell upon SCG addition/modification, if instructed, or upon DL/UL data arrival during RRC_CONNECTED requiring random access procedure. The UE initiated random access procedure is performed only on PSCell for SCG.

Furthermore, the random access procedure takes two distinct forms:

- Contention based (applicable to all six events, but the sixth event for positioning is applicable for NB-IoT only);
- Non-contention based (applicable to only handover, DL data arrival, positioning and obtaining timing advance alignment for a sTAG), except for NB-IoT.

Normal DL/UL transmission can take place after the random access procedure.

An RN supports both contention-based and non-contention-based random access. When an RN performs the random access procedure, it suspends any current RN subframe configuration, meaning it temporarily disregards the RN subframe configuration. The RN subframe configuration is resumed at successful random access procedure completion.

For NB-IoT, the random access procedure is performed on the anchor carrier.

## Contention based random access procedure

Description related to contention based random access procedure of 3GPP LTE/ LTE-A standard document is as following.

The contention based random access procedure is outlined on the Figure 5.

The four steps of the contention based random access procedures are:

1) Random Access Preamble on RACH in uplink:

- There are two possible groups defined and one is optional. If both groups are configured the size of message 3 and the pathloss are used to determine which group a preamble is selected from. The group to which a preamble belongs provides an indication of the size of the message 3 and the radio conditions at the UE. The preamble group information along with the necessary thresholds are broadcast on system information.

2) Random Access Response generated by MAC on DL-SCH:

- Semi-synchronous (within a flexible window of which the size is one or more TTI) with message 1;
- No HARQ;
- Addressed to RA-RNTI on PDCCH;
- Conveys at least RA-preamble identifier, Timing Alignment information for the pTAG, initial UL grant and assignment of Temporary C-RNTI (which may or may not be made permanent upon Contention Resolution);
- Intended for a variable number of UEs in one DL-SCH message.

3) First scheduled UL transmission on UL-SCH:

- Uses HARQ;
- Size of the transport blocks depends on the UL grant conveyed in step 2.
- For initial access:
- Conveys the RRC Connection Request generated by the RRC layer and transmitted via CCCH;
- Conveys at least NAS UE identifier but no NAS message;
- RLC TM: no segmentation.
- For RRC Connection Re-establishment procedure:
- Conveys the RRC Connection Re-establishment Request generated by the RRC layer and transmitted via CCCH;
- RLC TM: no segmentation;
- Does not contain any NAS message.
- After handover, in the target cell:
- Conveys the ciphered and integrity protected RRC Handover Confirm generated by the RRC layer and transmitted via DCCH;
- Conveys the C-RNTI of the UE (which was allocated via the Handover Command);
- Includes an uplink Buffer Status Report when possible.
- For other events:
- Conveys at least the C-RNTI of the UE;
- In the procedure to resume the RRC connection:
- Conveys the RRC Connection Resume Request generated by the RRC layer and transmitted via CCCH;
- Conveys a Resume ID to resume the RRC connection;
- For NB-IoT:
- In the procedure to setup the RRC connection:
- An indication of the amount of data for subsequent transmission(s) on SRB or DRB can be indicated.

4) Contention Resolution on DL:

- Early contention resolution shall be used i.e. eNB does not wait for NAS reply before resolving contention;
- Not synchronised with message 3;
- HARQ is supported;
- Addressed to:
- The Temporary C-RNTI on PDCCH for initial access and after radio link failure;
- The C-RNTI on PDCCH for UE in RRC_CONNECTED.
- HARQ feedback is transmitted only by the UE which detects its own UE identity, as provided in message 3, echoed in the Contention Resolution message;
- For initial access and RRC Connection Re-establishment procedure, no segmentation is used (RLC-TM).

The Temporary C-RNTI is promoted to C-RNTI for a UE which detects RA success and does not already have a C-RNTI; it is dropped by others. A UE which detects RA success and already has a C-RNTI, resumes using its C-RNTI.
When CA is configured, the first three steps of the contention based random access procedures occur on the PCell while contention resolution (step 4) can be cross-scheduled by the PCell.
When DC is configured, the first three steps of the contention based random access procedures occur on the PCell in MCG and PSCell in SCG. When CA is configured in SCG, the first three steps of the contention based random access procedures occur on the PSCell while contention resolution (step 4) can be cross-scheduled by the PSCell.

**Non-contention based random access procedure**

Description related to non-contention random access procedure of 3GPP LTE/LTE-A standard document is as following.
The non-contention based random access procedure is outlined on the Figure 4.
The three steps of the non-contention based random access procedures are:

0) Random Access Preamble assignment via dedicated signalling in DL:

- eNB assigns to UE a non-contention Random Access Preamble (a Random Access Preamble not within the set sent in broadcast signalling).
- Signalled via:
- HO command generated by target eNB and sent via source eNB for handover;
- PDCCH in case of DL data arrival or positioning;
- PDCCH for initial UL time alignment for a sTAG.

1) Random Access Preamble on RACH in uplink:

- UE transmits the assigned non-contention Random Access Preamble.

2) Random Access Response on DL-SCH:

- Semi-synchronous (within a flexible window of which the size is two or more TTIs) with message 1;
- No ARQ;
- Addressed to RA-RNTI on PDCCH;
- Conveys at least:

- Timing Alignment information and initial UL grant for handover;
- Timing Alignment information for DL data arrival;
- RA-preamble identifier;
- Intended for one or multiple UEs in one DL-SCH message.

When performing non-contention based random access on the PCell while CA is configured, the Random Access Preamble assignment via PDCCH of step 0, step 1 and 2 of the non-contention based random access procedure occur on the PCell. In order to establish timing advance for a sTAG, the eNB may initiate a non-contention based random access procedure with a PDCCH order (step 0) that is sent on a scheduling cell of activated SCell of the sTAG. Preamble transmission (step 1) is on the indicated SCell and Random Access Response (step 2) takes place on PCell.

When performing non-contention based random access on the PCell or PSCell while DC is configured, the Random Access Preamble assignment via PDCCH of step 0, step 1 and 2 of the non-contention based random access procedure occur on the corresponding cell. In order to establish timing advance for a sTAG, the eNB may initiate a non-contention based random access procedure with a PDCCH order (step 0) that is sent on a scheduling cell of activated SCell of the sTAG not including PSCell. Preamble transmission (step 1) is on the indicated SCell and Random Access Response (step 2) takes place on PCell for MCG and PSCell for SCG.

## Random Access Procedure initialization

Description related to random access procedure initialization of 3GPP LTE/LTE-A standard document is as following.

The Random Access procedure described in this subclause is initiated by a PDCCH order, by the MAC sublayer itself or by the RRC sublayer. Random Access procedure on an SCell shall only be initiated by a PDCCH order. If a MAC entity receives a PDCCH transmission consistent with a PDCCH order [5] masked with its C-RNTI, and for a specific Serving Cell, the MAC entity shall initiate a Random Access procedure on this Serving Cell. For Random Access on the SpCell a PDCCH order or RRC optionally indicate the ra-PreambleIndex and the ra-PRACH-MaskIndex, except for NB-IoT where the subcarrier index is indicated; and for Random Access on an SCell, the PDCCH order indicates the ra-PreambleIndex with a value different from 000000 and the ra-PRACH-MaskIndex. For the pTAG preamble transmission on PRACH and reception of a PDCCH order are only supported for SpCell. If the UE is an NB-IoT UE and is configured with a non-anchor carrier, the Random Access procedure is performed on the anchor carrier or one of the non-anchor carriers for which PRACH resource has been configured.

Before the procedure can be initiated, the following information for related Serving Cell is assumed to be available for UEs other than NB-IoT UEs, BL UEs or UEs in enhanced coverage [8], unless explicitly stated otherwise:

- the available set of PRACH resources for the transmission of the Random Access Preamble, prach-ConfigIndex.
- the groups of Random Access Preambles and the set of available Random Access Preambles in each group (SpCell only):

  The preambles that are contained in Random Access Preambles group A and Random Access Preambles group B are calculated from the parameters numberOfRA-Preambles and sizeOfRA-PreamblesGroupA: If sizeOfRA-PreamblesGroupA is equal to numberOfRA-Preambles then there is no Random Access Preambles group B. The preambles in Random Access Preamble group A are the preambles 0 to sizeOfRA-PreamblesGroupA - 1 and, if it exists, the preambles in Random Access Preamble group B are the preambles sizeOfRA-PreamblesGroupA to numberOfRA-Preambles - 1 from the set of 64 preambles as defined in [7].

- if Random Access Preambles group B exists, the thresholds, messagePowerOffsetGroupB and messageSize-GroupA, the configured UE transmitted power of the Serving Cell performing the Random Access Procedure, PCMAX, c [10], and the offset between the preamble and Msg3, deltaPreambleMsg3, that are required for selecting one of the two groups of Random Access Preambles (SpCell only).
- the RA response window size ra-ResponseWindowSize.
- the power-ramping factor powerRampingStep.
- the maximum number of preamble transmission preambleTransMax.
- the initial preamble power preambleInitialReceivedTargetPower.
- the preamble format based offset DELTA_PREAMBLE (see subclause 7.6).
- the maximum number of Msg3 HARQ transmissions maxHARQ-Msg3Tx (SpCell only).
- the Contention Resolution Timer mac-ContentionResolutionTimer (SpCell only).

NOTE: The above parameters may be updated from upper layers before each Random Access procedure is initiated.

The following information for related Serving Cell is assumed to be available before the procedure can be initiated for NB-IoT UEs, BL UEs or UEs in enhanced coverage [8]:

- if the UE is a BL UE or a UE in enhanced coverage:
- the available set of PRACH resources associated with each enhanced coverage level supported in the Serving Cell for the transmission of the Random Access Preamble, prach-ConfigIndex.
- the groups of Random Access Preambles and the set of available Random Access Preambles in each group(SpCell only):

  The preambles that are contained in Random Access Preamble groups for each enhanced coverage level, if it exists, are the preambles firstPreamble to lastPreamble.

  If sizeOfRA-PreamblesGroupA is not equal to numberOfRA-Preambles, Random Access Preambles group B exists for all enhanced coverage levels and is calculated as above.

  NOTE: If Random Access Preamble group B exists, the eNB should ensure that at least one Random Access Preamble is contained in Random Access Preamble group A and Random Access Preamble group B for all enhanced coverage level.

- if the UE is a NB-IoT UE:
- the available set of PRACH resources supported in the Serving Cell on the anchor carrier, nprach-ParametersList, and on the non-anchor carriers, nprach-ConfigList-r14.
- for random access resource selection and preamble transmission:
- a PRACH resource is mapped into an enhanced coverage level.
- each PRACH resource contains a set of nprach-NumSubcarriers subcarriers which can be partitioned into one or two groups for single/multi-tone Msg3 transmission by nprach-SubcarrierMSG3-RangeStart and nprach-NumCBRA-StartSubcarriers as specified in TS 36.211 [7, 10.1.6.1]. Each group is referred to as a Random Access Preamble group below in the procedure text.
- a subcarrier is identified by the subcarrier index in the range:
  [nprach-SubcarrierOffset, nprach-SubcarrierOffset + nprach-NumSubcarriers -1]
- each subcarrier of a Random Access Preamble group corresponds to a Random Access Preamble.
- when the subcarrier index is explicitly sent from the eNB as part of a PDCCH order ra-PreambleIndex shall be set to the signalled subcarrier index.
- the mapping of the PRACH resources into enhanced coverage levels is determined according to the following:
- the number of enhanced coverage levels is equal to one plus the number of RSRP thresholds present in rsrp-ThresholdsPrachInfoList.
- each enhanced coverage level has one anchor carrier PRACH resource present in nprach-ParametersList and zero or one PRACH resource for each non-anchor carrier signalled in nprach-ConfigList-r14.
- enhanced coverage levels are numbered from 0 and the mapping of PRACH resources to enhanced coverage levels are done in increasing numRepetitionsPer-PreambleAttempt order.
- when multiple carriers provide PRACH resources for the same enhanced coverage level, the UE will randomly select one of them using the following selection probabilities:
- the selection probability for the anchor carrier PRACH resource is given by nprach-Probability Anchor
- the selection probability is equal for all non-anchor carrier PRACH resources and the probability of selecting one PRACH resource on a given non-anchor carrier is (1-nprach-ProbabilityAnchor)/(number of non-anchor NPRACH resources)
- the criteria to select PRACH resources based on RSRP measurement per enhanced coverage level supported in the Serving Cell rsrp-ThresholdsPrachInfoList.
- the maximum number of preamble transmission attempts per enhanced coverage level supported in the Serving Cell maxNumPreambleAttemptCE.
- the number of repetitions required for preamble transmission per attempt for each enhanced coverage level supported in the Serving Cell numRepetitionPerPreambleAttempt.
- the configured UE transmitted power of the Serving Cell performing the Random Access Procedure, PCMAX, c [10].
- the RA response window size ra-ResponseWindowSize and the Contention Resolution Timer mac-ContentionResolutionTimer (SpCell only) per enhanced coverage level supported in the Serving Cell.
- the power-ramping factor powerRampingStep.
- the maximum number of preamble transmission preambleTransMax-CE.
- the initial preamble power preambleInitialReceivedTargetPower.
- the preamble format based offset DELTA_PREAMBLE (see subclause 7.6). For NB-IoT the DELTA_PREAMBLE is set to 0.

The Random Access procedure shall be performed as follows:

- Flush the Msg3 buffer;
- set the PREAMBLE_TRANSMISSION_COUNTER to 1;
- if the UE is an NB-IoT UE, a BL UE or a UE in enhanced coverage:
- set the PREAMBLE_TRANSMISSION_COUNTER_CE to 1;
- if the starting enhanced coverage level, or for NB-IoT the starting number of NPRACH repetitions, has been indicated in the PDCCH order which initiated the Random Access procedure, or if the starting enhanced coverage level has been provided by upper layers:
- the MAC entity considers itself to be in that enhanced coverage level regardless of the measured RSRP;
- else:

  - if the RSRP threshold of enhanced coverage level 3 is configured by upper layers in rsrp-ThresholdsPrachInfoList and the measured RSRP is less than the RSRP threshold of enhanced coverage level 3 and the UE is capable of enhanced coverage level 3 then:

    - the MAC entity considers to be in enhanced coverage level 3;

  - else if the RSRP threshold of enhanced coverage level 2 configured by upper layers in rsrp-ThresholdsPrachInfoList and the measured RSRP is less than the RSRP threshold of enhanced coverage level 2 and the UE is capable of enhanced coverage level 2 then:

    - the MAC entity considers to be in enhanced coverage level 2;

  - else if the measured RSRP is less than the RSRP threshold of enhanced coverage level 1 as configured by upper layers in rsrp-ThresholdsPrachInfoList then:

    - the MAC entity considers to be in enhanced coverage level 1;

- else:

  - the MAC entity considers to be in enhanced coverage level 0;
  - set the backoff parameter value to 0 ms;
  - for the RN, suspend any RN subframe configuration;
  - proceed to the selection of the Random Access Resource (see subclause 5.1.2).

NOTE: There is only one Random Access procedure ongoing at any point in time in a MAC entity. If the MAC entity receives a request for a new Random Access procedure while another is already ongoing in the MAC entity, it is up to UE implementation whether to continue with the ongoing procedure or start with the new procedure.
NOTE: A NB-IoT UE measures RSRP on the anchor carrier.

**Random Access Resource selection**

Description related to random access resource selection of 3GPP LTE/LTE-A standard document is as following.
The Random Access Resource selection procedure shall be performed as follows:

- If, except for NB-IoT, *ra*-PreambleIndex (Random Access Preamble) and *ra*-PRACH-MaskIndex (PRACH Mask Index) have been explicitly signalled and *ra-PreambleIndex* is not 000000:

  - the Random Access Preamble and the PRACH Mask Index are those explicitly signalled;
  - else, for NB-IoT, if *ra*-PreambleIndex (Random Access Preamble) and PRACH resource have been explicitly signalled:

- the PRACH resource is that explicitly signalled;

  - if the *ra*-PreambleIndex signalled is not 000000:

- the Random Access Preamble is set to *nprach*-SubcarrierOffset + (*ra-PreambleIndex* modulo *nprach*-NumSub-carriers), where *nprach-SubcarrierOffset* and *nprach*-NumSubcarriers are parameters in the currently used PRACH resource.

- else:

  - select the Random Access Preamble group according to the PRACH resource and the support for multi-tone Msg3 transmission. A UE supporting multi-tone Msg3 shall only select the single-tone Msg3 Random Access Preambles group if there is no multi-tone Msg3 Random Access Preambles group.
  - randomly select a Random Access Preamble within the selected group.

- else the Random Access Preamble shall be selected by the MAC entity as follows:

  - For NB-IoT, randomly select one of the PRACH resources corresponding to the selected enhanced coverage level according to the configured probability distribution, and select the Random Access Preambles group corresponding to the PRACH resource and the support for multi-tone Msg3 transmission. A UE supporting multi-tone Msg3 shall only select the single-tone Msg3 Random Access Preambles group if there is no multi-tone Msg3 Random Access Preambles group.

- If Msg3 has not yet been transmitted, the MAC entity shall, for BL UEs or UEs in enhanced coverage:

  - select the Random Access Preambles group and the PRACH resource corresponding to the selected enhanced coverage level;
  - except for NB-IoT, if Msg3 has not yet been transmitted, the MAC entity shall, except for BL UEs or UEs in enhanced coverage in case preamble group B does not exists:

    - if Random Access Preambles group B exists and any of the following events occur:
    - the potential message size (UL data available for transmission plus MAC header and, where required, MAC control elements) is greater than *messageSizeGroupA* and the pathloss is less than $P_{CMAX,c}$ (of the Serving Cell performing the Random Access Procedure) - *preambleInitialReceivedTargetPower* - *deltaPreambleMsg3* - *message-PowerOffsetGroupB;*
    - the Random Access procedure was initiated for the CCCH logical channel and the CCCH SDU size plus MAC header is greater than *messageSizeGroupA;*
    - select the Random Access Preambles group B;

- else:

  - select the Random Access Preambles group A.
  - else, if Msg3 is being retransmitted, the MAC entity shall:
  - select the same group of Random Access Preambles as was used for the preamble transmission attempt corresponding to the first transmission of Msg3.
  - randomly select a Random Access Preamble within the selected group. The random function shall be such that each of the allowed selections can be chosen with equal probability;
  - except for NB-IoT, set PRACH Mask Index to 0.
  - determine the next available subframe containing PRACH permitted by the restrictions given by the *prach*-ConfigIndex (except for NB-IoT), the PRACH Mask Index (except for NB-IoT, see subclause 7.3), physical layer timing requirements [2] and in case of NB-IoT, the subframes occupied by PRACH resources related to a higher enhanced coverage level (a MAC entity may take into account the possible occurrence of measurement gaps when determining the next available PRACH subframe);

- if the transmission mode is TDD and the PRACH Mask Index is equal to zero:

  - if *ra*-PreambleIndex was explicitly signalled and it was not 000000 (i.e., not selected by MAC):
  - randomly select, with equal probability, one PRACH from the PRACHs available in the determined subframe.

- else:

  - randomly select, with equal probability, one PRACH from the PRACHs available in the determined subframe and the next two consecutive subframes.

- else:

    - determine a PRACH within the determined subframe in accordance with the requirements of the PRACH Mask Index, if any.
    - for NB-IoT UEs, BL UEs or UEs in enhanced coverage, select the *ra-ResponseWindowSize* and *mac*-ContentionResolutionTimer corresponding to the selected enhanced coverage level and PRACH.
    - proceed to the transmission of the Random Access Preamble (see subclause 5.1.3).

**Random Access Preamble transmission**

Description related to random access preamble transmission of 3GPP LTE/LTE-A standard document is as following.

The random-access procedure shall be performed as follows:

- set PREAMBLE_RECEIVED_TARGET_POWER to *preambleInitialReceivedTargetPower* + DELTA_PREAMBLE + (PREAMBLE_TRANSMISSION_COUNTER - 1) * *powerRampingStep;*
- if the UE is a BL UE or a UE in enhanced coverage:
- the PREAMBLE_RECEIVED_TARGET_POWER is set to:

    PREAMBLE_RECEIVED_TARGET_POWER - 10 * log10(*numRepetitionPerPreambleAttempt);*
    - if NB-IoT:

- for enhanced coverage level 0, the PREAMBLE_RECEIVED_TARGET_POWER is set to:
  PREAMBLE_RECEIVED_TARGET_POWER - 10 * log10(*numRepetitionPerPreambleAttempt*)
- for other enhanced coverage levels, the
  PREAMBLE_RECEIVED_TARGET_POWER is set corresponding to the max UE output power;
- if the UE is an NB-IoT UE, a BL UE or a UE in enhanced coverage:
- instruct the physical layer to transmit a preamble with the number of repetitions required for preamble transmission corresponding to the selected preamble group (i.e., *numRepetitionPerPreambleAttempt*) using the selected PRACH corresponding to the selected enhanced coverage level, corresponding RA-RNTI, preamble index or for NB-IoT subcarrier index, and PREAMBLE_RECEIVED_TARGET_POWER.
- else:

    - instruct the physical layer to transmit a preamble using the selected PRACH, corresponding RA-RNTI, preamble index and
      PREAMBLE_RECEIVED_TARGET_POWER.

**Random Access Response reception**

Description related to random access response reception of 3GPP LTE/LTE-A standard document is as following.

Once the Random Access Preamble is transmitted and regardless of the possible occurrence of a measurement gap or a Sidelink Discovery Gap for Transmission or a Sidelink Discovery Gap for Reception, the MAC entity shall monitor the PDCCH of the SpCell for Random Access Response(s) identified by the RA-RNTI defined below, in the RA Response window which starts at the subframe that contains the end of the preamble transmission [7] plus three subframes and has length *ra- ResponseWindowSize*. If the UE is a BL UE or a UE in enhanced coverage, RA Response window starts at the subframe that contains the end of the last preamble repetition plus three subframes and has length *ra-ResponseWindowSize* for the corresponding coverage level. If the UE is an NB-IoT UE, in case the number of NPRACH repetitions is greater than or equal to 64, RA Response window starts at the subframe that contains the end of the last preamble repetition plus 41 subframes and has length *ra-Response WindowSize* for the corresponding coverage level, and in case the number of NPRACH repetitions is less than 64, RA Response window starts at the subframe that contains the end of the last preamble repetition plus 4 subframes and has length *ra- ResponseWindowSize* for the corresponding coverage level. The RA-RNTI associated with the PRACH in which the Random Access Preamble is transmitted, is computed as:

$$RA\text{-}RNTI = 1 + t\_id + 10*f\_id$$

where t_id is the index of the first subframe of the specified PRACH (0= t_id <10), and f_id is the index of the specified PRACH within that subframe, in ascending order of frequency domain (0≤=f_id<6) except for NB-IoT UEs, BL UEs or UEs in enhanced coverage. If the PRACH resource is on a TDD carrier, the f_id is set to $f_{RA}$, where $f_{RA}$ is defined in Section 5.7.1 of [7].

For BL UEs and UEs in enhanced coverage, RA-RNTI associated with the PRACH in which the Random Access Preamble is transmitted, is computed as:

$$RA\text{-}RNTI = 1 + t\_id + 10*f\_id + 60*(SFN\_id \bmod (Wmax/10))$$

where t_id is the index of the first subframe of the specified PRACH (0= t_id <10), f_id is the index of the specified PRACH within that subframe, in ascending order of frequency domain (0≤=f_id< 6), SFN_id is the index of the first radio frame of the specified PRACH, and Wmax is 400, maximum possible RAR window size in subframes for BL UEs or UEs in enhanced coverage. If the PRACH resource is on a TDD carrier, the f_id is set to $f_{RA}$, where $f_{RA}$ is defined in Section 5.7.1 of [7].

For NB-IoT UEs, the RA-RNTI associated with the PRACH in which the Random Access Preamble is transmitted, is computed as:

$$RA\text{-}RNTI = 1 + floor(SFN\_id/4) + 256*carrier\_id$$

where SFN_id is the index of the first radio frame of the specified PRACH and carrier_id is the index of the UL carrier associated with the specified PRACH. The carrier_id of the anchor carrier is 0.

The MAC entity may stop monitoring for Random Access Response(s) after successful reception of a Random Access Response containing Random Access Preamble identifiers that matches the transmitted Random Access Preamble.

- If a downlink assignment for this TTI has been received on the PDCCH for the RA-RNTI and the received TB is successfully decoded, the MAC entity shall regardless of the possible occurrence of a measurement gap or a Sidelink Discovery Gap for Transmission or a Sidelink Discovery Gap for Reception:

    - if the Random Access Response contains a Backoff Indicator subheader:
    - set the backoff parameter value as indicated by the BI field of the Backoff Indicator subheader and Table 7.2-1, except for NB-IoT where the value from Table 7.2-2 is used.
    - else, set the backoff parameter value to 0 ms.

- if the Random Access Response contains a Random Access Preamble identifier corresponding to the transmitted Random Access Preamble (see subclause 5.1.3), the MAC entity shall:

    - consider this Random Access Response reception successful and apply the following actions for the serving cell where the Random Access Preamble was transmitted:

        - process the received Timing Advance Command (see subclause 5.2);
        - indicate the *preambleInitialReceivedTargetPower* and the amount of power ramping applied to the latest preamble transmission to lower layers (i.e., (PREAMBLE_TRANSMISSION_COUNTER - 1) * *powerRampingStep*);
        - if the SCell is configured with *ul-Configuration-r14,* ignore the received UL grant otherwise process the received UL grant value and indicate it to the lower layers;

    - if, except for NB-IoT, *ra*-PreambleIndex was explicitly signalled and it was not 000000 (i.e., not selected by MAC):

        - consider the Random Access procedure successfully completed.
        - else, if, except for NB-IoT, the Random Access Preamble was selected by the MAC entity, or for NB-IoT:

- set the Temporary C-RNTI to the value received in the Random Access Response message no later than at the time of the first transmission corresponding to the UL grant provided in the Random Access Response message;
- if this is the first successfully received Random Access Response within this Random Access procedure:

- if the transmission is not being made for the CCCH logical channel, indicate to the Multiplexing and assembly entity to include a C-RNTI MAC control element in the subsequent uplink transmission;
- obtain the MAC PDU to transmit from the "Multiplexing and assembly" entity and store it in the Msg3 buffer.

NOTE: When an uplink transmission is required, e.g., for contention resolution, the eNB should not provide a grant smaller than 56 bits (or 88 bits for NB-IoT) in the Random Access Response.

NOTE: If within a Random Access procedure, an uplink grant provided in the Random Access Response for the same group of Random Access Preambles has a different size than the first uplink grant allocated during that Random Access procedure, the UE behavior is not defined.

If no Random Access Response is received within the RA Response window, or if none of all received Random Access Responses contains a Random Access Preamble identifier corresponding to the transmitted Random Access Preamble, the Random Access Response reception is considered not successful and the MAC entity shall:

- if the notification of power ramping suspension has not been received from lower layers:
- increment PREAMBLE_TRANSMISSION_COUNTER by 1;
- if the UE is an NB-IoT UE, a BL UE or a UE in enhanced coverage:

    - if PREAMBLE_TRANSMISSION_COUNTER = *preambleTransMax*-CE + 1:

        - if the Random Access Preamble is transmitted on the SpCell:

            - indicate a Random Access problem to upper layers;

    - if NB-IoT:

        - consider the Random Access procedure unsuccessfully completed;

    - else:

        - if PREAMBLE_TRANSMISSION_COUNTER = *preambleTransMax* + 1:

            - if the Random Access Preamble is transmitted on the SpCell:

                - indicate a Random Access problem to upper layers;

- if the Random Access Preamble is transmitted on an SCell:

    - consider the Random Access procedure unsuccessfully completed.

- if in this Random Access procedure, the Random Access Preamble was selected by MAC:

    - based on the backoff parameter, select a random backoff time according to a uniform distribution between 0 and the Backoff Parameter Value;
    - delay the subsequent Random Access transmission by the backoff time;

- else if the SCell where the Random Access Preamble was transmitted is configured with *ul-Configuration-r14:*

    - delay the subsequent Random Access transmission until the Random Access Procedure is initiated by a PDCCH order with the same *ra*-PreambleIndex and ra-PRACH-MaskIndex;

- if the UE is an NB-IoT UE, a BL UE or a UE in enhanced coverage:

    - increment PREAMBLE_TRANSMISSION_COUNTER_CE by 1;

- if PREAMBLE_TRANSMISSION_COUNTER_CE = *maxNumPreambleAttemptCE* for the corresponding enhanced coverage level + 1:

  - reset PREAMBLE_TRANSMISSION_COUNTER_CE;
  - consider to be in the next enhanced coverage level, if it is supported by the Serving Cell and the UE, otherwise stay in the current enhanced coverage level;

- for a BL UE or a UE in enhanced coverage, select the Random Access Preambles group and the PRACH resource corresponding to the selected enhanced coverage level;- if the UE is an NB-IoT UE:

  - if the Random Access Procedure was initiated by a PDCCH order:

    - randomly select one of the PRACH resources corresponding to the selected enhanced coverage level according to the configured probability distribution;

Editor's note: In Rel-13 the eNB knows exactly which preamble/subcarrier the UE will use when the RA is triggered by a PDCCH order with non-zero preambleIndex, even if the UE changes CE level. However, when the PRACH resource is randomly selected at every CE level change this will no longer be the case. Whether this issue needs to be addressed is FFS.

  - consider the selected PRACH resource as explicitly signalled;
  - proceed to the selection of a Random Access Resource (see subclause 5.1.2).

## Contention Resolution

Description related to contention resolution of 3GPP LTE/LTE-A standard document is as following.

Contention Resolution is based on either C-RNTI on PDCCH of the SpCell or UE Contention Resolution Identity on DL-SCH. If the UE is an NB-IoT UE, a BL UE or a UE in enhanced coverage, the MAC entity shall use the *mac-ContentionResolutionTimer* for the corresponding enhanced coverage level if it exists.

Once Msg3 is transmitted, the MAC entity shall:

- except for a BL UE or a UE in enhanced coverage, or a NB-IoT UE, start *mac-* ContentionResolutionTimer and restart *mac-*ContentionResolutionTimer at each HARQ retransmission;
- for a BL UE or a UE in enhanced coverage, or a NB-IoT UE, start *mac-ContentionResolutionTimer* and restart *mac-*ContentionResolutionTimer at each HARQ retransmission of the bundle in the subframe containing the last repetition of the corresponding PUSCH transmission;
- regardless of the possible occurrence of a measurement gap or Sidelink Discovery Gap for Reception, monitor the PDCCH until *mac-ContentionResolutionTimer* expires or is stopped;
- if notification of a reception of a PDCCH transmission is received from lower layers, the MAC entity shall:

  - if the C-RNTI MAC control element was included in Msg3:
  - if the Random Access procedure was initiated by the MAC sublayer itself or by the RRC sublayer and the PDCCH transmission is addressed to the C-RNTI and contains an UL grant for a new transmission; or
  - if the Random Access procedure was initiated by a PDCCH order and the PDCCH transmission is addressed to the C-RNTI:

    - consider this Contention Resolution successful;
    - stop *mac-*ContentionResolutionTimer;
    - discard the Temporary C-RNTI;
    - if the UE is an NB-IoT UE and is configured with a non-anchor carrier:

      - the UL grant or DL assignment contained in the PDCCH transmission is valid only for the configured non-anchor carrier.
      - consider this Random Access procedure successfully completed.

- else if the CCCH SDU was included in Msg3 and the PDCCH transmission is addressed to its Temporary C-RNTI:

  - if the MAC PDU is successfully decoded:

- stop *mac*-ContentionResolutionTimer;
- if the MAC PDU contains a UE Contention Resolution Identity MAC control element; and
- if the UE Contention Resolution Identity included in the MAC control element matches the 48 first bits of the CCCH SDU transmitted in Msg3:

  - consider this Contention Resolution successful and finish the disassembly and demultiplexing of the MAC PDU;
  - set the C-RNTI to the value of the Temporary C-RNTI;
  - discard the Temporary C-RNTI;
  - consider this Random Access procedure successfully completed.

- else

  - discard the Temporary C-RNTI;
  - consider this Contention Resolution not successful and discard the successfully decoded MAC PDU.
  - if *mac*-ContentionResolutionTimer expires:

    - discard the Temporary C-RNTI;
    - consider the Contention Resolution not successful.

- if the Contention Resolution is considered not successful the MAC entity shall:

  - flush the HARQ buffer used for transmission of the MAC PDU in the Msg3 buffer;
  - if the notification of power ramping suspension has not been received from lower layers:
  - increment PREAMBLE_TRANSMISSION_COUNTER by 1;

- if the UE is an NB-IoT UE, a BL UE or a UE in enhanced coverage:

  - if PREAMBLE_TRANSMISSION_COUNTER = *preambleTransMax*-CE + 1:

    - indicate a Random Access problem to upper layers.

  - if NB-IoT:

    - consider the Random Access procedure unsuccessfully completed;

- else:

  - if PREAMBLE_TRANSMISSION_COUNTER = *preambleTransMax* + 1:

    - indicate a Random Access problem to upper layers.

  - based on the backoff parameter, select a random backoff time according to a uniform distribution between 0 and the Backoff Parameter Value;
  - delay the subsequent Random Access transmission by the backoff time;
  - proceed to the selection of a Random Access Resource (see subclause 5.1.2).

**Completion of the Random Access procedure**

Description related to completion of random access procedure of 3GPP LTE/LTE-A standard document is as following.

At completion of the Random Access procedure, the MAC entity shall:

- discard explicitly signalled *ra-PreambleIndex* and *ra-PRACH-MaskIndex,* if any;
- flush the HARQ buffer used for transmission of the MAC PDU in the Msg3 buffer.

In addition, the RN shall resume the suspended RN subframe configuration, if any.

The Table 1 illustrates values of backoff parameter except for NB-IoT in a random access procedure.

[Table 1]

| Index | Backoff Parameter value (ms) |
|---|---|
| 0 | 0 |
| 1 | 10 |
| 2 | 20 |
| 3 | 30 |
| 4 | 40 |
| 5 | 60 |
| 6 | 80 |
| 7 | 120 |
| 8 | 160 |
| 9 | 240 |
| 10 | 320 |
| 11 | 480 |
| 12 | 960 |
| 13 | Reserved |
| 14 | Reserved |
| 15 | Reserved |

The reserved values of the backoff parameter in the Table 1, if received by the current release version UEs, shall be taken as 960 ms.

The Table 2 illustrates values of backoff parameter for NB-IoT.

[Table 2]

| Index | Backoff Parameter value (ms) |
|---|---|
| 0 | 0 |
| 1 | 256 |
| 2 | 512 |
| 3 | 1024 |
| 4 | 2048 |
| 5 | 4096 |
| 6 | 8192 |
| 7 | 16384 |
| 8 | 32768 |
| 9 | 65536 |
| 10 | 131072 |
| 11 | 262144 |
| 12 | 524288 |
| 13 | Reserved |

(continued)

| Index | Backoff Parameter value (ms) |
|---|---|
| 14 | Reserved |
| 15 | Reserved |

The reserved values of the backoff parameter in the Table 2, if received by the current release version NB-IoT UEs, shall be taken as 524288 ms.

MAC PDU (Random Access Response)

FIG. 6 is a diagram illustrating E/T/RAPID MAC subheader, and FIG. 7 is a diagram illustrating E/T/R/R/BI MAC subheader.

A MAC Protocol Data Unit (MAC PDU) consists of a MAC header and zero or more MAC Random Access Responses (MAC RAR) and optionally padding as described in the FIG. 6. The MAC header is of variable size.

A MAC PDU header consists of one or more MAC PDU subheaders; each subheader corresponding to a MAC RAR except for the Backoff Indicator subheader. If included, the Backoff Indicator subheader is only included once and is the first subheader included within the MAC PDU header.

A MAC PDU subheader consists of the three header fields E/T/RAPID (as described in the FIG. 6) but for the Backoff Indicator subheader which consists of the five header field E/T/R/R/BI (as described in the FIG. 7).

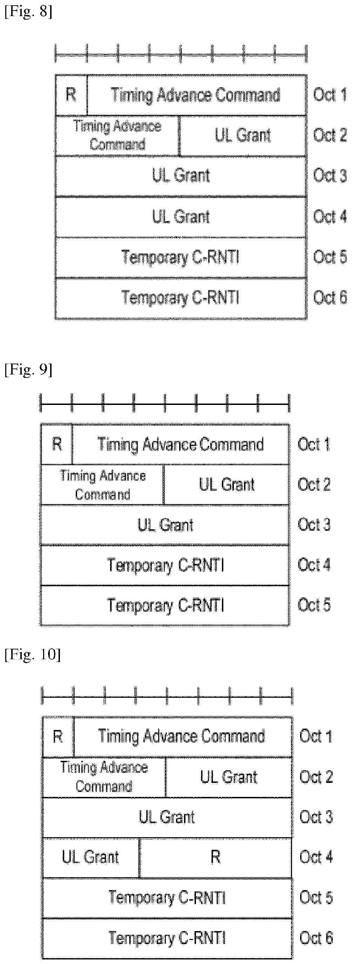

FIG. 8 is a diagram illustrating MAC RAR, FIG. 9 is a diagram illustrating MAC RAR for PRACH enhanced coverage level 2 or 3, and FIG. 10 is a diagram illustrating MAC RAR for NB-IoT UEs.

A MAC RAR consists of the four fields R/Timing Advance Command/UL Grant/ Temporary C-RNTI (as described in the FIG. 8 to 10). For BL UEs and UEs in enhanced coverage in enhanced coverage level 2 or 3 the MAC RAR in the FIG. 9 is used, for NB-IoT UEs the MAC RAR in the FIG. 10 is used, otherwise the MAC RAR in the FIG. 8 is used. Padding may occur after the last MAC RAR. Presence and length of padding is implicit based on TB size, size of MAC header and number of RARs.

**Random Access procedure with** Backoff Indicator (BI)

In LTE/LTE-A Random Access procedure, a UE may receive a Backoff Indicator (BI) (e.g., as a type of backoff indicator subheader) via Random Access Response (RAR). The BI indicates backoff parameter value. In case of RAR reception failure, the UE selects one backoff time value from 0 to backoff parameter (or value of backoff parameter) as indicated by BI (as illustrated in the Table 1 and Table 2). In this case, it may be assumed that UEs know information of the Table 1 and the Table 2 in advance. The UE may delay the subsequent RAP transmission by the selected backoff time.

In selecting the backoff time, the UE performs a uniform random draw with equal probability. The UE doesn't take any priority of data or event into account in the LTE/ LTE-A random access procedure. In other words, there has been no prioritization between data/events in the LTE/LTE-A random access procedure. Accordingly, a UE which triggers the random access procedure for RRC Connection establishment may delay RAP transmission by a longer time than a UE which triggers random access procedure already in RRC Connected.

For the NR, the present invention proposes to differentiate events of triggering RA procedure so that urgent/important event/data is prioritized over non-urgent/unimportant event. For example, a short BI (or small backoff parameter value) is given (or applied) for urgent/important event/data while a long BI (or large backoff parameter value) is given (or applied) for non-urgent/unimportant event/data. This proposal is to enable fast RAP transmission for the prioritized event/data.

However, since a UE with lower priority is still allowed to select a backoff time within the small range of backoff parameters (or backoff parameter values), fast random access preamble (RAP) retransmission according to selection of a backoff time within the small range of backoff parameter values leads to congestion within the small range of backoff parameter values. For example, if a UE with higher priority selects a backoff time between 0 and B1 while a UE with lower priority selects a backoff time between 0 and B2 (where B1<B2, accordingly, a range of [0, B1] is smaller than a range of [0, B2]). The collision probability of UEs within [0, B1] will higher than the collision probability of UEs within [B1, B2]. Thus, even though the UE with highest priority transmits RAP earlier than other UEs, the UE with highest priority may fail RAP transmission due to increased collision. Therefore, it is required to prevent a UE with lower priority from selecting a backoff time which is allowed for a UE with higher priority. For example, the UE with lower priority may select a backoff time within a range of [B1, B2], the UE with higher priority may select a backoff time within a range of [0, B1].

**Random Access procedure with** Backoff Indicator (BI) and Backoff offset

A UE is provided with a backoff offset (or backoff offset value) as well as backoff indicator from a network (e.g., gNodeB). As described above, the backoff parameter value is indicated by the backoff indicator. The UE uses the backoff offset value as a minimum boundary when selecting a backoff time for transmitting a Random Access Preamble (RAP). In other words, the UE selects a backoff time for transmitting a subsequent RAP between backoff offset value and backoff parameter value (i.e., within a range of [backoff offset value, backoff parameter value]). When selecting the backoff offset value for transmitting the subsequent RAP, the UE may select the backoff time between backoff offset value and backoff parameter value according to a uniform distribution. Then, the UE may delay the transmission of the subsequent RAP by the selected backoff time.

As described above, the UE receives a backoff offset value from a network (e.g., gNodeB) as follows. For example, the UE may receive one or more BOs from the network. In the case, the UE may receive one backoff offset value, the UE uses the backoff offset value regardless of an event that triggers a random access (RA) procedure.

Meanwhile, the UE may receive more than one backoff offset values, each of the one or more backoff offset values is associated with an event that iniaties a RA procedure. For example, backoff offset 1 is associated with a Random Access (RA) procedure triggered by UL data arrival, while backoff offset 2 is associated with a RA procedure triggered for RRC Connection establishment. Alternatively, the UE may receive only one backoff offset value, and adjust the received backoff offset value depending on the event that initiates the RA procedure.

The UE may receive the backoff offset value through an MAC signaling or an RRC signaling. The MAC signaling is, for example, an Random Access Response (RAR) message; the RRC signaling is, for example, an RRC reconfiguration message including information related to a random access procedure.

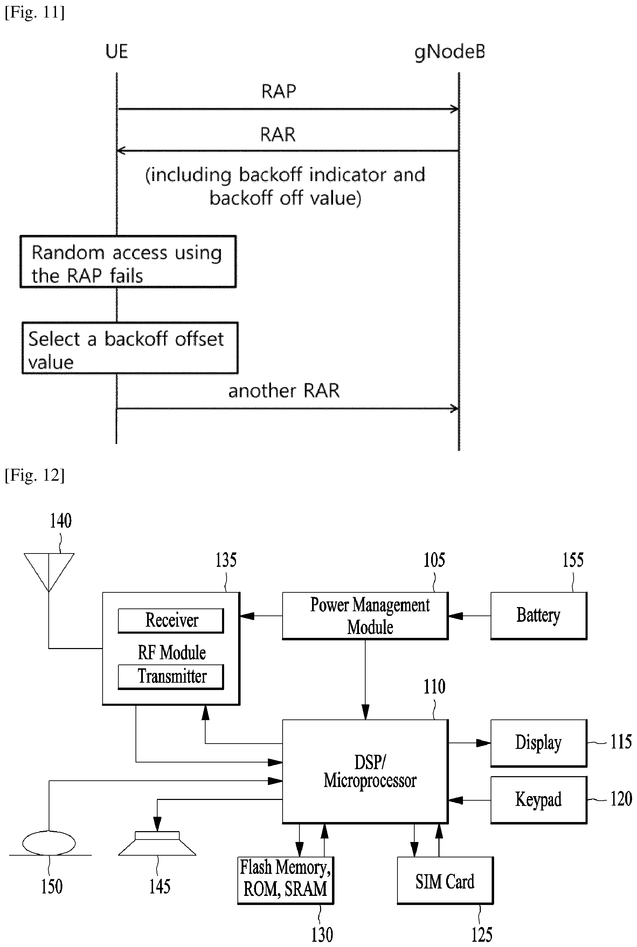

An example steps in an RA procedure is described below and illustrated in FIG. 11.

FIG. 11 is a flow diagram of a random access procedure according to an embodiment of the present invention.

The Present invention proposes method for performing random access procedure by the UE when a random access using a random access preamble fails. For example, when (1) the UE fails a random access response (RAR) reception or (2) a contention resolution is not successful, the random access using the first random access preamble may fail.

The UE initiates a random access (RA) procedure. The UE selects a random access resource to transmit a random access preamble (RAP). The UE transmits the RAP on the selected random access resource. The UE monitors an RAR in response to the transmitted RAP during an RAR window.

(1) The UE fails a random access response (RAR) reception

The UE receives the RAR including a Backoff Indicator (BI) (e.g., as a type of Backoff Indicator subheader) and a backoff offset value. If the RAR doesn't include the RAP that the UE transmitted, the UE sets the backoff parameter value as indicated by the backoff indicator (or backoff indicator subheader).

If RAR window expires and RAR reception fails, the UE performs a subsequent RAP transmission as follows. The UE selects a (random) backoff time based on the backoff parameter value and backoff offset value between backoff offset value and the backoff parameter value. The random backoff time may be selected according to a uniform distribution between backoff offset value and the backoff parameter value. The UE delays the subsequent RAP transmission by the selected backoff time, which is randomly selected between the Backoff Offset and the Backoff Parameter. The UE transmits another RAP after the selected backoff time. The UE receives an RAR in response to the transmitted RAP during an RAR window.

(2) A contention resolution is not successful

The UE transmits an Msg3 by using an UL grant indicated by the RAR. The Msg3 is defined as message transmitted on UL-SCH containing a C-RNTI MAC CE or CCCH SDU, submitted from upper layer and associated with the UE Contention Resolution Identity, as part of a random access procedure. After sending the Msg3, if the Contention Resolution is not successful, the UE performs a subsequent RAP transmission as follows. The UE selects a (random) backoff time based on the backoff parameter value and backoff offset value. The backoff time may be selected according to a uniform distribution between backoff offset value and the backoff parameter value. The UE delays the subsequent RAP transmission by the selected backoff time, which is randomly selected between the backoff offset and the backoff parameter value. The UE transmits another RAP after the selected backoff time.

In case the UE receives multiple backoff offset values, the UE may select a backoff time by using one of the multiple backoff offset values depending on the event that initiates the RA procedure. The UE may select one of the multiple backoff offset values which is associated with the event that initiates the RA procedure; then, the UE may use the selected backoff offset value as a minimum boundary for the uniform distribution.

In summary, during the RA procedure, the UE selects the backoff time according to a uniform distribution between the Backoff Offset and the Backoff Parameter in case of RAR reception failure or Contention Resolution failure. And then, the UE transmits another RAP after the selected backoff time.

FIG. 12 is a block diagram of an apparatus (e.g., communication apparatus) according to an embodiment of the present invention.

The apparatus shown in FIG. 12 can be a user equipment (UE) and/or eNB adapted to perform the above mechanism, but it can be any apparatus for performing the same operation.

As shown in FIG. 12, the apparatus may comprise a DSP/microprocessor (110) and RF module (transceiver; 135). The DSP/microprocessor (110) is electrically connected with the transceiver (135) and controls it. The apparatus may further include power management module (105), battery (155), display (115), keypad (120), SIM card (125), memory device (130), speaker (145) and input device (150), based on its implementation and designer's choice.

Specifically, FIG. 12 may represent a UE comprising a receiver (135) configured to receive signal from the network, and a transmitter (135) configured to transmit signals to the network. The receiver and transmitter can constitute the transceiver (135). The UE further comprises a processor (110) connected to the transceiver (135: receiver and transmitter).

Also, FIG. 12 may represent a network apparatus comprising a transmitter (135) configured to transmit signals to a UE and a receiver (135) configured to receive signal from the UE. These transmitter and receiver may constitute the transceiver (135). The network further comprises a processor (110) connected to the transmitter and the receiver.

It will be apparent to those skilled in the art that various modifications and variations can be made in the present invention without departing from the scope of the invention. Thus, it is intended that the present invention cover the modifications and variations of this invention provided they come within the scope of the appended claims.

In the embodiments of the present invention, a specific operation described as performed by the BS may be performed by an upper node of the BS. Namely, it is apparent that, in a network comprised of a plurality of network nodes including a BS, various operations performed for communication with an MS may be performed by the BS, or network nodes other than the BS. The term 'eNB' may be replaced with the term 'fixed station', 'Node B', 'Base Station (BS)', 'access point', 'gNB', etc.

The above-described embodiments may be implemented by various means, for example, by hardware, firmware, software, or a combination thereof.

In a hardware configuration, the method according to the embodiments of the present invention may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, or microprocessors.

In a firmware or software configuration, the method according to the embodiments of the present invention may be implemented in the form of modules, procedures, functions, etc. performing the above-described functions or operations. Software code may be stored in a memory unit and executed by a processor. The memory unit may be located at the interior or exterior of the processor and may transmit and receive data to and from the processor via various known means.

Those skilled in the art will appreciate that the present invention may be carried out in other specific ways than those set forth herein. The above embodiments are therefore to be construed in all aspects as illustrative and not restrictive. The scope of the invention should be determined by the appended claims, not by the above description.

**Industrial Applicability**

While the above-described method has been described centering on an example applied to the 3GPP system, the present invention is applicable to a variety of wireless communication systems, e.g. IEEE system, in addition to the 3GPP system.

**Claims**

1. A method for a user equipment, UE, performing a random access procedure, the method comprising:

   transmitting a first random access preamble;
   receiving a message including a backoff indicator, BI, and one or more backoff offset, BO, values;
   the method further comprising, when a random access using the first first random access preamble fails, selecting a backoff time based on the BI and a BO value; and
   transmitting a second random access preamble after the selected backoff time,
   wherein the message does not include the first random access preamble,

wherein the BO value is selected among the one or more BO values based on an event that triggers the random access procedure, and

wherein the backoff time is selected based on a uniform distribution between the BI and the BO value.

2. The method according to claim 1, wherein the BO value is larger than 0.

3. The method according to claim 1, wherein the random access using the first random access preamble fails when UE fails a random access response, RAR, reception or a contention resolution is not successful

4. The method according to claim 1, wherein the message includes a random access response, RAR, message.

5. A user equipment, UE, for performing a random access procedure, the UE comprising:

a transmitter configured to transmit a first random access preamble;

a receiver configured to receive a message including a backoff indicator, BI, and one or more backoff offset, BO, values; and

a processor (110) configured to, when when a random access using the first first random access preamble fails, select a backoff time based on the BI and a BO value, and transmit a second random access preamble after the selected backoff time,

wherein the message does not include the first random access preamble,

wherein the BO value is selected among the one or more BO values based on an event that triggers the random access procedure, and

wherein the backoff time is selected based on a uniform distribution between the BI and the BO value.

6. The UE according to claim 5, wherein the BO value is larger than 0.

7. The UE according to claim 5, wherein the random access using the first random access preamble fails when UE fails a random access response, RAR, reception or a contention resolution is not successful.

8. The UE according to claim 5, wherein the message includes a random access response, RAR, message.

**Patentansprüche**

1. Verfahren für ein Benutzergerät, UE, das ein Direktzugriffsverfahren durchführt, wobei das Verfahren umfasst:

Senden einer ersten Direktzugriffspräambel;

Empfangen einer Nachricht, die einen Backoff-Indikator, BI, und einen oder mehrere Backoff-Offset-, BO, Werte enthält;

wobei, wenn ein Direktzugriff unter Verwendung der ersten Direktzugriffspräambel fehlschlägt, das Verfahren ferner umfasst:

Auswählen einer Backoff-Zeit basierend auf dem BI und einem BO-Wert; und

Senden einer zweiten Direktzugriffspräambel nach der ausgewählten Backoff-Zeit,

wobei die Nachricht nicht die erste Direktzugriffspräambel enthält,

wobei der BO-Wert aus dem einen oder den mehreren BO-Werten basierend auf einem Ereignis ausgewählt wird, das das Direktzugriffsverfahren auslöst, und

wobei die Backoff-Zeit basierend auf einer gleichmäßigen Verteilung zwischen dem BI und dem BO-Wert ausgewählt wird.

2. Verfahren nach Anspruch 1, wobei der BO-Wert größer als 0 ist.

3. Verfahren nach Anspruch 1, wobei der Direktzugriff unter Verwendung der ersten Direktzugriffspräambel fehlschlägt, wenn ein Direktzugriffsantwort-, RAR, Empfang beim UE fehlschlägt oder eine Konfliktauflösung nicht erfolgreich ist.

4. Verfahren nach Anspruch 1, wobei die Nachricht eine Direktzugriffsantwort-, RAR, Nachricht enthält.

5. Benutzergerät, UE, zum Durchführen eines Direktzugriffsverfahrens, wobei das UE umfasst:

einen Sender, der eingerichtet ist, um eine erste Direktzugriffspräambel zu senden; einen Empfänger, der eingerichtet ist, um eine Nachricht zu empfangen, die einen Backoff-Indikator, BI, und einen oder mehrere Backoff-Offset-, BO, Werte enthält; und

einen Prozessor (110), der dazu eingerichtet ist, um, wenn ein Direktzugriff unter Verwendung der ersten Direktzugriffspräambel fehlschlägt,

eine Backoff-Zeit basierend auf dem BI und einem BO-Wert auszuwählen und

eine zweite Direktzugriffspräambel nach der ausgewählten Backoff-Zeit zu senden,

wobei die Nachricht nicht die erste Direktzugriffspräambel enthält,

wobei der BO-Wert aus dem einen oder den mehreren BO-Werten basierend auf einem Ereignis ausgewählt wird, das das Direktzugriffsverfahren auslöst, und

wobei die Backoff-Zeit basierend auf einer gleichmäßigen Verteilung zwischen dem BI und dem BO-Wert ausgewählt wird.

**6.** UE nach Anspruch 5, wobei der BO-Wert größer als 0 ist.

**7.** UE nach Anspruch 5, wobei der Direktzugriff unter Verwendung der ersten Direktzugriffspräambel fehlschlägt, wenn ein Direktzugriffsantwort-, RAR, Empfang beim UE fehlschlägt oder eine Konfliktauflösung nicht erfolgreich ist.

**8.** UE nach Anspruch 5, wobei die Nachricht eine Direktzugriffsantwort-, RAR, Nachricht enthält.

## Revendications

**1.** Procédé pour un équipement utilisateur, UE, réalisant une procédure d'accès aléatoire, le procédé consistant à :

transmettre un premier préambule d'accès aléatoire ;

recevoir un message contenant un indicateur d'attente, BI, et une ou plusieurs valeurs de décalage d'attente, BO ;

le procédé consistant en outre à, lorsqu'un accès aléatoire faisant appel à un premier préambule d'accès aléatoire échoue,

sélectionner un temps d'attente en fonction du BI et d'une valeur BO,

transmettre un second préambule d'accès aléatoire après le temps d'attente sélectionné,

le message ne contenant pas le premier préambule d'accès aléatoire,

la valeur BO étant sélectionnée parmi l'une ou plusieurs valeurs BO en fonction d'un événement qui déclenche la procédure d'accès aléatoire, et

le temps d'attente étant sélectionné en fonction d'une distribution uniforme entre le BI et la valeur BO.

**2.** Procédé selon la revendication 1, dans lequel la valeur BO est supérieure à 0.

**3.** Procédé selon la revendication 1, dans lequel l'accès aléatoire faisant appel au premier préambule d'accès échoue lorsque l'UE ne parvient pas à donner une réponse d'un accès aléatoire, RAR, qu'il ne reçoit pas ou qu'une résolution de collision échoue.

**4.** Procédé selon la revendication 1, dans lequel le message contient un message de réponse d'accès aléatoire, RAR.

**5.** Équipement utilisateur, UE, réalisant une procédure d'accès aléatoire, l'UE comprenant :

un émetteur configuré pour transmettre un premier préambule d'accès aléatoire ;

un récepteur configuré pour recevoir un message contenant un indicateur d'attente, BI, et une ou plusieurs valeurs de décalage d'attente, BO ; et

un processeur (110) configuré pour, lorsqu'un accès aléatoire faisant appel à un premier préambule d'accès aléatoire échoue,

sélectionner un temps d'attente en fonction du BI et d'une valeur BO, et

transmettre un second préambule d'accès aléatoire après le temps d'attente sélectionné,

le message ne contenant pas le premier préambule d'accès aléatoire,

la valeur BO étant sélectionnée parmi l'une ou plusieurs valeurs BO en fonction d'un événement qui déclenche la procédure d'accès aléatoire, et

le temps d'attente étant sélectionné en fonction d'une distribution uniforme entre le BI et la valeur BO.

**6.** UE selon la revendication 5, dans lequel la valeur BO est supérieure à 0.

**7.** UE selon la revendication 5, dans lequel l'accès aléatoire faisant appel au premier préambule d'accès échoue lorsque l'UE ne parvient pas à donner une réponse d'un accès aléatoire, RAR, qu'il ne reçoit pas ou qu'une résolution de collision échoue.

**8.** UE selon la revendication 5, dans lequel le message contient un message de réponse d'accès aléatoire, RAR.

[Fig. 1]

[Fig. 2]

[Fig. 3]

( a ) Control-Plane Protocol Stack

( b ) User-Plane Protocol Stack

[Fig. 4]

[Fig. 5]

[Fig. 6]

[Fig. 7]

[Fig. 8]

| R | Timing Advance Command | Oct 1 |
|---|---|---|
| Timing Advance Command | UL Grant | Oct 2 |
| UL Grant | | Oct 3 |
| UL Grant | | Oct 4 |
| Temporary C-RNTI | | Oct 5 |
| Temporary C-RNTI | | Oct 6 |

[Fig. 9]

| R | Timing Advance Command | Oct 1 |
|---|---|---|
| Timing Advance Command | UL Grant | Oct 2 |
| UL Grant | | Oct 3 |
| Temporary C-RNTI | | Oct 4 |
| Temporary C-RNTI | | Oct 5 |

[Fig. 10]

| R | Timing Advance Command | Oct 1 |
|---|---|---|
| Timing Advance Command | UL Grant | Oct 2 |
| UL Grant | | Oct 3 |
| UL Grant | R | Oct 4 |
| Temporary C-RNTI | | Oct 5 |
| Temporary C-RNTI | | Oct 6 |

[Fig. 11]

[Fig. 12]

**EP 3 607 801 B1**

**Patent documents cited in the description**

- US 2013279453 A1